# EUROPEAN PATENT APPLICATION

(11) **EP 4 574 558 A1**
(43) Date of publication of application: **25.06.2025**
(21) Application number: 23940534.3
(22) Date of filing: 31.12.2023
(51) Int. Cl.: B60N 2/02

(54) **ELECTRIC BASE AND AUTOMOBILE SEAT**

(30) Priority: 07.06.2023 CN 202321446405 U
(71) Applicant: Ningbo Baby First Baby Products Co., Ltd., Ningbo, Zhejiang 315400 (CN)
(72) Inventor: ZHOU, Xiaolin, Ningbo, Zhejiang 315400 (CN)
(74) Representative: Ipside
(86) International application number: PCT/CN2023/143730
(87) International publication number: WO 2024/250660

(57) **Abstract**

This invention discloses an electric base and a car seat, relating to the field of automotive accessory technology. By setting a first calibration part on the base and a second calibration part on the driving gear, after installing the driving gear on the drive motor, the driving gear can be positioned at a specific installation angle by aligning the first calibration part with the second calibration part. Then, after rotatably inserting the rotary disc into the rotary disc mounting hole on the base, it becomes more convenient for the driving gear to mesh with the passive gear on the rotary disc. This ensures that the rotary disc is installed at a specific angle, preventing any angular deviation of the seat and facilitating installation and angle calibration for manufacturers.

## Description

### Technical Field

This invention relates to the field of automotive accessory technology, particularly to an electric base and car seat.

### Background Art

With the rapid popularization of car ownership, people's demands for cars are increasing. The comfort level, load-bearing strength, craftsmanship, appearance requirements, and quality standards of car seats are becoming higher. Seats in cars need to make drivers and passengers feel comfortable and convenient to use. More and more seats are adding electric modules, and intelligent electric rotating seats have emerged as a result.

Electric adjustment is achieved through motors to realize the rotational adjustment of seats. However, the angle of the output shaft with a keyway positioning surface on each motor is different when it leaves the factory. When the gear is installed on the motor's output shaft, there will also be differences in gear angles. At this time, meshing with the rotary disc will cause the rotary disc to not be at the starting position during installation, resulting in angular deviation when installing the seat, which is not conducive to installation and angle calibration for manufacturers.

### Summary of the Invention

The purpose of this invention is to provide an electric base and car seat, making it more convenient for the driving gear to mesh with the passive gear on the rotary disc, thereby ensuring that the rotary disc is installed at a specific angle, preventing any angular deviation of the seat, and facilitating installation and angle calibration for manufacturers.

In the first aspect, this invention provides an electric base, including:
A base, equipped with a rotary disc mounting hole and a first calibration part;
A drive motor, mounted on the said base;
A driving gear, transmission-connected to the said drive motor, with the axis of the said driving gear parallel to the axis of the said rotary disc mounting hole, the said driving gear equipped with a second calibration part;
The said electric base has a calibration state, in which the said first calibration part and the said second calibration part correspond to each other.

In an optional embodiment, the said first calibration part is located on the said base in a position not covered by the said driving gear;
In the said calibration state, the line connecting the closest parts of the said first calibration part and the said second calibration part forms an angle with the axis of the said rotary disc mounting hole, and is located in the same vertical plane.

In an optional embodiment, the said first calibration part includes a connected first main part and first arrow part, the said first arrow part points towards the axis of the said driving gear, so that in the said calibration state, the said first arrow part points towards the said second calibration part.

In an optional embodiment, the said first main part is in the shape of a long strip, with its length extension line located within the said vertical plane.

In an optional embodiment, the said second calibration part includes a connected second main part and second arrow part, in the said calibration state, the said second arrow part points towards the said second calibration part.

In an optional embodiment, the said second main part is in the shape of a long strip, with its length extension line intersecting the axis of the said driving gear.

In an optional embodiment, the said first calibration part is a groove cut into the said base; and/or,

The said second calibration part is a groove cut into the said driving gear.

In an optional embodiment, the said second calibration part is a through-hole penetrating both end faces of the said driving gear, the said first calibration part is located on the said base in a position covered by the said driving gear, in the said calibration state, the said first calibration part and the said second calibration part are directly aligned.

In an optional embodiment, the said electric base also includes a rotary disc, the said rotary disc can be rotatably inserted into the said rotary disc mounting hole, wherein the side of the said rotary disc facing the said base is equipped with a coaxial passive gear, the said driving gear meshes with the said passive gear.

In the second aspect, this invention provides a car seat, including the electric base according to any one of the aforementioned embodiments.

The beneficial effects of the embodiments of this invention include:
By setting a first calibration part on the base and a second calibration part on the driving gear, after installing the driving gear on the drive motor, the driving gear can be positioned at a specific installation angle by aligning the first calibration part with the second calibration part. Then, after rotatably inserting the rotary disc into the rotary disc mounting hole on the base, it becomes more convenient for the driving gear to mesh with the passive gear on the rotary disc. This ensures that the rotary disc is installed at a specific angle, preventing any angular deviation of the seat and facilitating installation and angle calibration for manufacturers.

### Brief Description of the Drawings

To more clearly illustrate the technical solutions in the specific embodiments of this invention or in the prior art, a brief introduction to the drawings that need to be used in the description of the embodiments or the prior art will be given below. Obviously, the drawings described below are some embodiments of this invention. For those skilled in the art, other drawings can be obtained based on these drawings without creative labor.
Figure 1 is a top view of the electric base in this embodiment;
Figure 2 is a schematic diagram of the reverse side of the rotary disc in this embodiment;
Figure 3 is an exploded view of the electric base in this embodiment;
Figure 4 is a schematic diagram of Figure 1 with the rotary disc hidden.

List of reference numerals: 10-base; 11-rotary disc mounting hole; 12-first calibration part; 121-first arrow part; 122-first main part; 20-drive motor; 21-reducer; 30-driving gear; 31-second calibration part; 311-second arrow part; 312-second main part; 40-rotary disc; 41-passive gear; 50-electromagnetic lock; 60-electromagnetic induction device; A-vertical plane.

### Detailed Description of Embodiments

To make the purpose, technical solutions, and advantages of this invention's embodiments clearer, the following will describe the technical solutions in this invention's embodiments in conjunction with the accompanying drawings. Obviously, the described embodiments are only a part of this invention's embodiments, not all of them. Generally, the components of this invention's embodiments described and shown in these drawings can be arranged and designed in various different configurations.

Therefore, the following detailed description of the embodiments of this invention provided in the drawings is not intended to limit the scope of the invention to be protected, but merely represents selected embodiments of this invention. Based on the embodiments in this invention, all other embodiments obtained by those skilled in the art without creative labor are within the protection scope of this invention.

It should be noted that: similar numbers and letters in the following drawings indicate similar items, so once an item is defined in one drawing, it does not need to be further defined and explained in subsequent drawings.

In the description of this invention, it needs to be explained that terms such as "center", "up", "down", "left", "right", "vertical", "horizontal", "inner", "outer" indicating orientation or positional relationships are based on the orientation or positional relationships shown in the drawings, or the customary orientation or positional relationships when the invention product is in use. These are only for the convenience of describing this invention and simplifying the description, and do not indicate or imply that the referred device or element must have a specific orientation, be constructed and operated in a specific orientation. Therefore, they should not be understood as limitations on this invention. Furthermore, terms such as "first", "second", "third" are only used for distinguishing description and cannot be understood as indicating or implying relative importance.

In addition, terms such as "horizontal", "vertical", "suspended" do not indicate that the components must be absolutely horizontal or suspended, but can be slightly inclined. For example, "horizontal" only means that its direction is more horizontal relative to "vertical", and does not mean that the structure must be completely horizontal, but can be slightly inclined.

In the description of this invention, it also needs to be explained that, unless otherwise explicitly specified and limited, terms such as "set", "install", "connect", "link" should be understood broadly. For example, it can be a fixed connection, or a detachable connection, or an integral connection; it can be a mechanical connection, or an electrical connection; it can be a direct connection, or an indirect connection through an intermediate medium, or an internal communication between two elements. For ordinary technicians in this field, the specific meaning of the above terms in this invention can be understood according to specific situations.

The following will provide a detailed explanation of some embodiments of this invention in conjunction with the drawings. In cases where there is no conflict, the features in the following embodiments and examples can be combined with each other.

This embodiment of the invention discloses a car seat, which is mainly used to be set on the frame of a car for people to sit on.

In this embodiment, the car seat includes an electric base and a seat set on the electric base. The electric base is mainly used to support the seat and can drive the seat to rotate, so passengers only need to touch the control key to make the seat rotate, without actively changing their sitting posture to complete the adjustment of the seat.

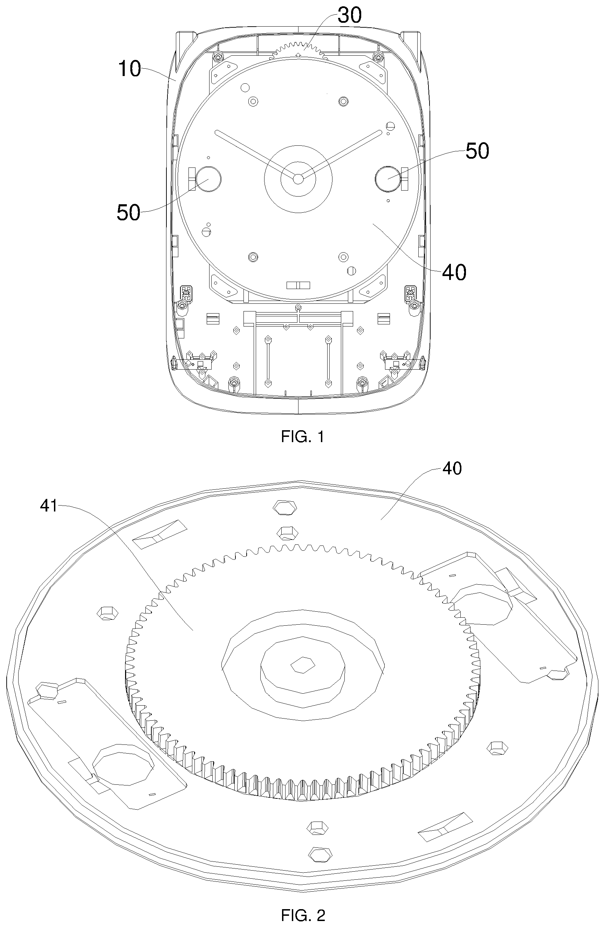

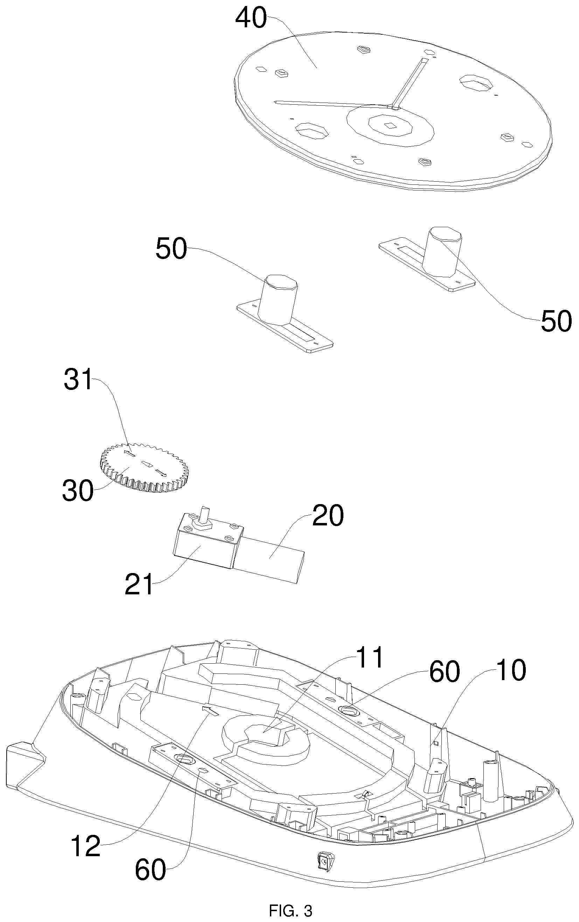

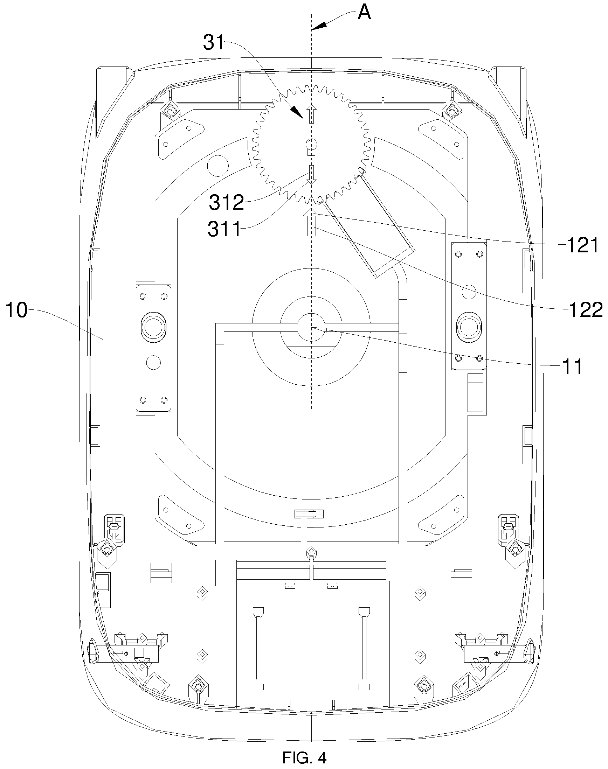

Please refer to Figures 1 to 4, the electric base mainly includes a base 10, a drive motor 20, a driving gear 30 and a rotary disc 40. The base 10 is equipped with a rotary disc mounting hole 11; the rotary disc 40 can be rotatably inserted into the rotary disc mounting hole 11, and the rotary disc 40 and the rotary disc mounting hole 11 are coaxial, so that it can rotate on the base 10. The side of the rotary disc 40 away from the base 10 is used for seat installation, so that when the rotary disc 40 rotates, it can drive the passengers sitting on the seat to rotate.

On the side of the rotary disc 40 close to the electric base, a coaxial passive gear 41 is set.

The drive motor 20 is installed on the base 10, the driving gear 30 is transmission-connected to the drive motor 20 through a reducer 21, and the driving gear 30 and the passive gear 41 mesh with each other. The axis of the driving gear 30 is parallel to the axis of the rotary disc mounting hole 11, so that the axis of the driving gear 30 is parallel to the axis of the rotary disc 40. In this way, when the rotor of the drive motor 20 works, its output torque can be transmitted to the driving gear 30 through the reducer 21, causing the driving gear 30 to rotate, and then drive the rotary disc 40 to rotate through the meshing transmission of the driving gear 30 and the passive gear 41.

In order to keep the height of the base 10 as small as possible and improve the structural compactness of the electric base, in this embodiment, the axial direction of the drive motor 20 is parallel to the base 10 and perpendicular to the axis of the rotary disc 40. In this case, the reducer 21 not only increases torque but also changes the direction of torque.

An electromagnetic lock 50 is set on the side of the rotary disc 40 away from the base 10, and correspondingly, an electromagnetic induction device 60 is set on the base 10. The cooperation between the electromagnetic induction device 60 and the electromagnetic lock 50 can fix the rotary disc 40 at a preset angle, thus achieving a locking function and fixing the seat.

In this embodiment, a first calibration part 12 is set on the base 10, while a second calibration part 31 is set on the driving gear 30. The electric base includes a calibration state, in which the first calibration part 12 and the second calibration part 31 correspond to each other.

In this way, after installing the driving gear 30 on the drive motor 20, the driving gear 30 can be positioned at a specific installation angle by aligning the first calibration part 12 with the second calibration part 31. This makes it more convenient for the driving gear 30 to mesh with the passive gear 41 on the rotary disc 40, ensuring that the rotary disc 40 is installed at a specific angle. This prevents any angular deviation of the seat and facilitates installation and angle calibration for manufacturers.

The first calibration part 12 is specifically located on the base 10 in a position not covered by the driving gear 30;

In the calibration state, the line connecting the closest parts of the first calibration part 12 and the second calibration part 31 forms an angle with the axis of the rotary disc mounting hole 11, and is located in the same vertical plane A.

Specifically, the first calibration part 12 is a groove cut into the base 10; the second calibration part 31 is a groove cut into the driving gear 30. The first calibration part 12 includes a connected first main part 122 and first arrow part 121, the first arrow part 121 points towards the axis of the driving gear 30, so that in the calibration state, the first arrow part 121 points towards the second calibration part 31. The first main part 122 is in the shape of a long strip, with its length extension line located within the vertical plane A. The second calibration part 31 includes a connected second main part 312 and second arrow part 311, in the calibration state, the second arrow part 311 points towards the second calibration part 31. The second main part is in the shape of a long strip, with its length extension line intersecting the axis of the driving gear 30.

This allows users to more accurately determine whether the first calibration part 12 and the second calibration part 31 correspond.

The number of second calibration parts 31 is not specifically limited in this embodiment. For example, there can be two as shown in the figure, with a central angle of 180° between the two second calibration parts 31, meaning the two second calibration parts 31 are distributed in a circular array around the axis of the driving gear 30. Of course, the number of second calibration parts 31 can also be one, or three or more. When there are three or more second calibration parts 31, they are distributed in a circular array around the axis of the driving gear 30.

In addition, in some embodiments, the second calibration part 31 can also be a through-hole penetrating both end faces of the driving gear 30, with the first calibration part 12 located on the base 10 in a position covered by the driving gear 30. In the calibration state, the first calibration part 12 and the second calibration part 31 are directly aligned, so that the first calibration part 12 can be seen directly through the hole to determine that the first calibration part 12 and the second calibration part 31 correspond to each other.

In summary, this embodiment discloses an electric base and a car seat. By setting a first calibration part 12 on the base 10 and a second calibration part 31 on the driving gear 30, after installing the driving gear 30 on the drive motor 20, the driving gear 30 can be positioned at a specific installation angle by aligning the first calibration part 12 with the second calibration part 31. Then, after rotatably inserting the rotary disc 40 into the rotary disc mounting hole 11 on the base 10, it becomes more convenient for the driving gear 30 to mesh with the passive gear 41 on the rotary disc 40. This ensures that the rotary disc 40 is installed at a specific angle, preventing any angular deviation of the seat and facilitating installation and angle calibration for manufacturers.

Finally, it should be noted that: the above embodiments are only used to illustrate the technical solutions of this invention, not to limit them; although this invention has been described in detail with reference to the above embodiments, those skilled in the art should understand that: they can still modify the technical solutions recorded in the above embodiments, or replace part or all of the technical features with equivalent substitutions; these modifications or replacements do not make the essence of the corresponding technical solutions deviate from the scope of the technical solutions of the embodiments of this invention.

## Claims

1. An electric base, **characterized by** comprising:
a base (10), equipped with a rotary disc mounting hole (11) and a first calibration part (12);
a drive motor (20), mounted on the base (10);
a driving gear (30), transmission-connected to the drive motor (20), with the axis of the driving gear (30) parallel to the axis of the rotary disc mounting hole (11), the driving gear (30) equipped with a second calibration part (31);
the electric base has a calibration state, in which the first calibration part (12) and the second calibration part (31) correspond to each other.

2. The electric base according to claim 1, **characterized in that** the first calibration part (12) is located on the base (10) in a position not covered by the driving gear (30);
in the calibration state, the line connecting the closest parts of the first calibration part (12) and the second calibration part (31) forms an angle with the axis of the rotary disc mounting hole (11), and is located in the same vertical plane (A).

3. The electric base according to claim 2, **characterized in that** the first calibration part (12) includes a connected first main part (122) and first arrow part (121), the first arrow part (121) points towards the axis of the driving gear (30), so that in the calibration state, the first arrow part (121) points towards the second calibration part (31).

4. The electric base according to claim 3, **characterized in that** the first main part (122) is in the shape of a long strip, with its length extension line located within the vertical plane (A).

5. The electric base according to claim 2, **characterized in that** the second calibration part (31) includes a connected second main part (312) and second arrow part (311), in the calibration state, the second arrow part (311) points towards the second calibration part (31).

6. The electric base according to claim 5, **characterized in that** the second main part (312) is in the shape of a long strip, with its length extension line intersecting the axis of the driving gear (30).

7. The electric base according to any one of claims 2-6, **characterized in that** the first calibration part (12) is a groove cut into the base (10); and/or,
the second calibration part (31) is a groove cut into the driving gear (30).

8. The electric base according to claim 1, **characterized in that** the second calibration part (31) is a through-hole penetrating both end faces of the driving gear (30), the first calibration part (12) is located on the base (10) in a position covered by the driving gear (30), in the calibration state, the first calibration part (12) and the second calibration part (31) are directly aligned.

9. The electric base according to claim 1, **characterized in that** the electric base also includes a rotary disc (40), the rotary disc (40) can be rotatably inserted into the rotary disc mounting hole (11), wherein the side of the rotary disc (40) facing the base (10) is equipped with a coaxial passive gear (41), the driving gear (30) meshes with the passive gear (41).

10. A car seat, **characterized by** including the electric base according to any one of claims 1-9.
